Europäisches Patentamt

European Patent Office

Office européen des brevets

(11) Numéro de publication : **0 343 022 B1**

# (12) FASCICULE DE BREVET EUROPEEN

(45) Date de publication du fascicule du brevet :
**12.02.92 Bulletin 92/07**

(51) Int. Cl.$^5$ : **B62M 9/12,** B62M 1/00, G01L 3/14

(21) Numéro de dépôt : **89400998.4**

(22) Date de dépôt : **12.04.89**

(54) **Roue motrice de cycle ou similaire, comportant un système de détection du couple transmis, et cycle équipé d'une telle roue.**

(30) Priorité : **17.05.88 FR 8806567**

(43) Date de publication de la demande :
**23.11.89 Bulletin 89/47**

(45) Mention de la délivrance du brevet :
**12.02.92 Bulletin 92/07**

(84) Etats contractants désignés :
**AT BE CH DE FR IT LI LU NL**

(56) Documents cités :
**DE-A- 3 150 149
DE-C- 3 504 047
FR-A- 2 394 790
US-A- 3 881 347**

(73) Titulaire : **STE LOOK
Rue de la Pique, B.P. No. 72
F-58004 Nevers Cédex (FR)**

(72) Inventeur : **Mercat, Jean-Pierre
24 Rue Gambetta
F-37110 Château-Renault (FR)**

(74) Mandataire : **Tony-Durand, Serge
Cabinet Tony-Durand 77, rue Boissière
F-75116 Paris (FR)**

Jouve, 18, rue Saint-Denis, 75001 PARIS

## Description

La présente invention concerne la mesure du couple transmis par une roue motrice, notamment la roue motrice d'un cycle.

La mesure de la puissance développée et/ou de l'énergie dépensée par un cycliste présente un intérêt primordial lorsqu'il s'agit d'un coureur lors de son entraînement. Cependant une telle mesure est également indispensable dans le cas de personnes pratiquant la bicyclette à titre de rééducation physique après un accident, ou bien pour le traitement de certaines maladies de la circulation sanguine ou plus simplement pour l'amélioration de leur condition physique.

C'est pourquoi il existe déjà un certain nombre de dispositifs spécialement conçus pour permettre la mesure du couple transmis sur une bicyclette. Ainsi, le FR 2.394.790 décrit un dispositif conçu pour mesurer le couple transmis par la chaine motrice en contrôlant la tension du brin moteur de celle-ci. A cet effet, ce dispositif comporte un galet qui est appliqué, par la pression d'un ressort, contre le brin moteur de cette chaine. Or, plus l'effort transmis par cette chaine est important, plus son brin moteur tend à se redresser en comprimant le ressort du dispositif de mesure. Ainsi, il existe une règle de correspondance entre la flèche du ressort et l'effort transmis par le brin moteur de la chaine.

Toutefois, un tel dispositif fournit des indications extrêmement imprécises en raison des parasites dûs aux vibrations de fonctionnement de la chaine. De plus l'effort mesuré est celui transmis par la chaine. Or, à valeur égale, celui-ci peut correspondre à des couples différents sur la roue motrice si la bicyclette est équipée d'un dispositif de changement de vitesse. Enfin un tel dispositif introduit un frottement préjudiciable sur la chaine d'entraînement.

Une solution apparemment plus avantageuse consisterait à mesurer le couple transmis par la roue motrice d'une bicyclette et ce, directement sur le moyeu de cette roue ou une autre pièce rotative associée à celui-ci. Toutefois, il est très délicat de mesurer un couple sur une pièce tournante si le capteur utilisé est implanté directement sur cette pièce. En effet, il est nécessaire de faire passer, les informations provenant de ce capteur, à une pièce fixe pour pouvoir traiter ces informations et afficher les résultats obtenus. Or la liaison à prévoir entre la pièce tournante et la pièce fixe soulève des problèmes très difficiles à résoudre dans le cas du moyeu d'une roue arrière de bicyclette. Ainsi si l'on utilise des jauges résistives qui sont employées fréquemment pour des mesures de ce genre, leur emploi introduit des frottements et des dérives dans les informations détectées, et ce en raison de la nécessité de prévoir un collecteur électrique tournant pour recueillir l'information provenant d'une pièce rotative.

Pour contourner ce problème, le DE 3.150.149 décrit un système de mesure assurant la mesure optique de la torsion d'un moyeu de roue de cycle entre une partie menante de celui-ci et une partie menée sous l'action du couple transmis. Cependant cette solution est relativement complexe et coûteuse, et elle présente un certain nombre d'inconvénients. Ainsi, ce système est particulièrement encombrant du fait de la présence des organes de mesure optique. De plus, la consommation de ce système en énergie électrique est loin d'être négligeable. Enfin, du fait même du très grand rapprochement existant entre la partie menante et la partie menée du moyeu, les écarts angulaires entre ces deux parties sont très réduits, ce qui ne permet pas des mesures précises.

C'est pourquoi la présente invention a pour objet une roue motrice de cycle qui est équipée d'un système de mesure de couple conçu de façon à éviter les inconvénients des différents systèmes antérieurs rappelés ci-dessus. De plus, la conception de ce système de mesure est telle que celui-ci est peu coûteux.

A cet effet, la présente invention a pour objet une roue motrice de cycle ou similaire caractérisée en ce que :

   – entre une première pièce du mécanisme d'entraînement, qui est accouplée avec le ou les pignons de cette roue, et une seconde pièce montée axialement coulissante sur l'arbre fixe du moyeu et solidaire en rotation à la fois avec cette première pièce et avec le moyeu, il est prévu une ou plusieurs cames ou similaires aptes à provoquer une poussée axiale tendant à écarter ces deux pièces sous l'effet de la rotation qui leur est impartie,

   – et en ce que des moyens de détection de la valeur d'un effort de poussée sont disposés en regard de l'une de ces pièces, ces moyens de détection étant portés par une pièce non rotative et étant reliés à un système de mesure apte à établir, à partir des données provenant de ceux-ci, la valeur du couple d'entraînement appliqué à la roue, ou une grandeur associée à celui-ci.

Ainsi, la mesure du couple transmis par la présente roue est réalisée par détection de la valeur d'un effort de poussée axiale sur une pièce fixe, ce qui évite les difficultés rencontrées lorsque l'on cherche à mesurer la valeur de ce couple au moyen d'un capteur implanté directement sur une pièce rotative. En effet dans le cas présent, la liaison électrique des moyens de détection avec le système de traitement des informations reçues ne présente aucune difficulté.

Dans une forme de réalisation avantageuse les moyens de détection utilisés sont disposés en regard de la première pièce rotative du mécanisme d'entraînement, avec interposition d'un roulement ou d'une butée à billes ou à aiguilles.

Dans un tel cas, le capteur des efforts de poussée peut avantageusement consister en un disque flexible évidé disposé sur l'arbre fixe du moyeu et qui porte une ou plusieurs jauges d'extensométrie branchées dans le circuit du système de mesure.

Selon une autre caractéristique de la présente roue motrice, la solidarisation en rotation de la seconde pièce du mécanisme d'entraînement avec le moyeu de cette roue peut être assurée par des moyens d'accouplement actifs uniquement dans le sens moteur et un jeu suffisant est prévu pour permettre la libre rotation du moyeu en roue libre.

Cependant la présente invention a également pour objet un cycle comportant une roue motrice telle que définie précédemment,ce cycle étant équipé de moyens de traitement et d'affichage des informations provenant du système de détection prévu dans cette roue.

Du reste d'autres particularités et avantages de l'objet de l'invention ressortiront de la description suivante. Celle-ci est donnée en référence au dessin annexé à simple titre d'exemple indicatif, et sur lequel :

La figure 1 est une vue en élévation latérale d'une bicyclette équipée d'une roue motrice selon l'invention,

La figure 2 est une vue en coupe axiale du moyeu de la roue arrière de cette bicyclette et du mécanisme d'entraînement de celui-ci,

La figure 3 est une vue éclatée des principales pièces de ce mécanisme d'entraînement et des organes prévus dans celui-ci pour la détection de la valeur du couple transmis,

La figure 4 est une vue partielle en coupe d'un détail de ce mécanisme alors que celui-ci entraîne le moyeu de la roue,

La figure 5 est une vue similaire illustrant le fonctionnement du système de roue libre prévu dans ce mécanisme,

La figure 6 représente le schéma d'ensemble du système de mesure et d'affichage prévu sur la bicyclette illustrée à la figure 1,

La figure 7 est une vue schématique en coupe axiale d'une variante de réalisation du mécanisme d'entraînement de la roue motrice selon l'invention.

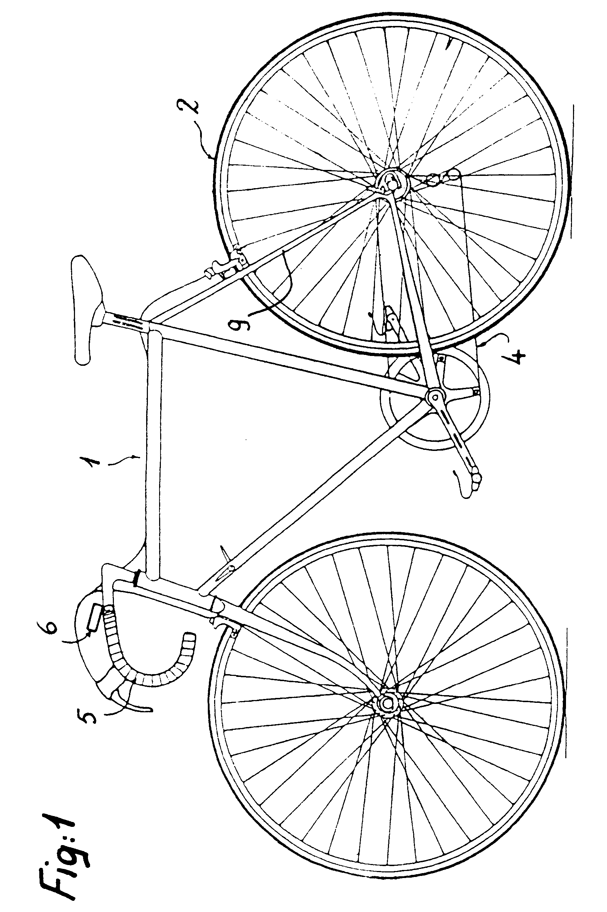

La bicyclette 1 représentée à la figure 1 comporte une roue arrière motrice 2 dont le mécanisme d'entraînement comporte un système de détection tel que défini précédemment. Ce mécanisme assure l'entraînement du moyeu 3 de cette roue à partir d'un ou plusieurs pignons de réception de la chaine motrice 4. Par ailleurs, le guidon 5 de cette bicyclette porte un boîtier 6 renfermant les moyens de traitement des informations provenant des moyens de détection prévus dans le mécanisme d'entraînement de la roue arrière, ce boîtier comportant également un écran d'affichage 7 des résultats obtenus.

De la façon habituelle, le moyeu 3 de la roue arrière est monté rotatif autour d'un arbre fixe 8 disposé entre les deux branches de la fourche arrière 9 du cadre 1. Dans l'exemple représenté, le mécanisme d'entraînement de ce moyeu comprend une série de pignons de réception de la chaine motrice 4, lesquels sont situés sur l'un des côtés du moyeu 3. L'un de ces pignons 10 est vissé sur un fourreau 11 servant de support à l'ensemble. Ainsi ce pignon maintient en place les autres pignons 12 également solidaires en rotation avec le fourreau 11. Ce dernier est monté rotatif autour de l'extrémité correspondante de l'arbre 8 par l'intermédiaire d'un roulement étanche 13 disposé du côté externe et d'une douille à aiguilles 14 située du côté opposé.

Le mécanisme d'entraînement du moyeu 3 comprend une première pièce rotative 15 consistant en une couronne dentée dont les dents sont engagées dans des gorges longitudinales de la paroi interne du fourreau 11. Ceci assure l'accouplement en rotation de ces deux pièces. En regard de la couronne 15 il est prévu une seconde pièce rotative constituée par une bague 16 également montée coulissante sur l'arbre fixe 8. Ces deux pièces 15 et 16 sont accouplées en rotation du fait qu'elles comportent, sur leurs faces en regard, des dents ou protubérances respectivement 17 et 18 qui sont en prise les unes avec les autres.

Du côté opposé à la couronne 15, la bague 16 est disposée en regard d'un manchon 19 solidaire en rotation avec le moyeu 3. Ce manchon est monté rotatif autour de l'arbre 8 par l'intermédiaire d'un roulement à aiguilles 20. L'extrémité opposée du moyeu 3 comporte une cage 21 montée rotative sur l'extrémité correspondante de l'arbre 8 par l'intermédiaire d'un roulement 22. De plus, cette cage est en appui contre une butée à aiguilles 23 destinée à supporter l'effort axial s'exerçant dans la direction correspondante.

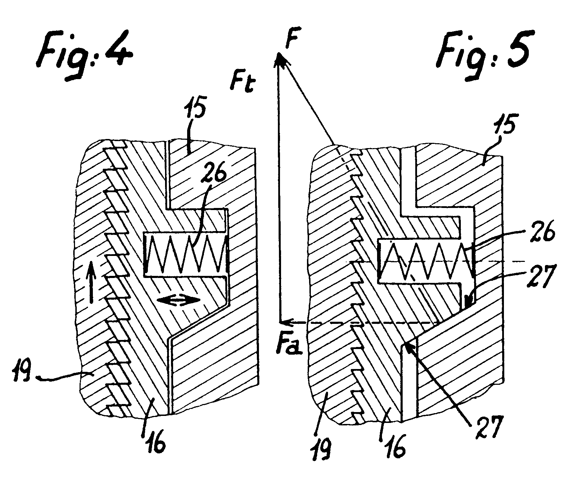

La solidarisation en rotation de la bague 16 avec le manchon 19 solidaire du moyeu est assuré par des moyens d'accouplement formant un système de roue libre. Ces moyens d'accouplement consistent en deux séries complémentaires de dents 24 et 25 en forme de dents de loup dont l'inclinaison est telle qu'elles assurent un accouplement en rotation uniquement dans le sens moteur. De plus, il est prévu entre ces deux pièces un jeu suffisant pour permettre une libre rotation du manchon 19 par rapport à la bague 16 en roue libre, les dents 25 du manchon 19 venant alors repousser les dents 24 de la bague 16, comme représenté sur la figure 5. Des ressorts de poussée 26 sont interposés entre ces deux pièces 16 et 19 et se trouvent donc comprimés lorsque le système fonctionne à la façon d'une roue libre.

Conformément à une caractéristique essentielle, il est prévu une ou plusieurs cames ou similaires aptes à provoquer une poussée axiale tendant à écarter les deux pièces sous l'effet de la rotation qui leur est impartie; dans le cas échéant les faces en regard des dents d'accouplement 17 et 18 des deux pièces 15 et 16 comportent des rampes hélicoïdales 27 qui sont aptes à provoquer une poussée axiale d'écartement de ces deux pièces l'une par rapport à l'autre sous l'effet de la rotation qui leur est impartie. Cependant au lieu de rampes hélicoïdales il serait possible de prévoir tout autre type de came apte à assurer un effort de poussée axiale sous l'effet de la rotation des deux pièces 15 et 16, comme précisé dans la revendication 1.

Du côté opposé au moyeu, la couronne 15 prend appui sur des moyens fixes de détection qui sont aptes à détecter la valeur de l'effort de poussée exercée sur cette couronne. Dans l'exemple représenté, ces moyens de détection consistent en un disque flexible évidé 28 rapporté sur l'arbre 3 et qui porte une jauge d'extensométrie 29. Ce disque flexible, qui est immobilisé en rotation, prend appui sur une rondelle fixe 30 dont le diamètre est tel que seul le bord interne de ce disque se trouve au contact de celle-ci. Par contre, la poussée axiale provenant de la couronne 15 s'exerce sur ce disque flexible 28 à la périphérie de celui-ci. A cet effet, cette poussée axiale est transmise par une bague 31 affectant en quelque sorte la forme d'une cloche dont le bord 32 en appui contre le disque 28 est de faible largeur et s'applique uniquement sur la périphérie de celui-ci.

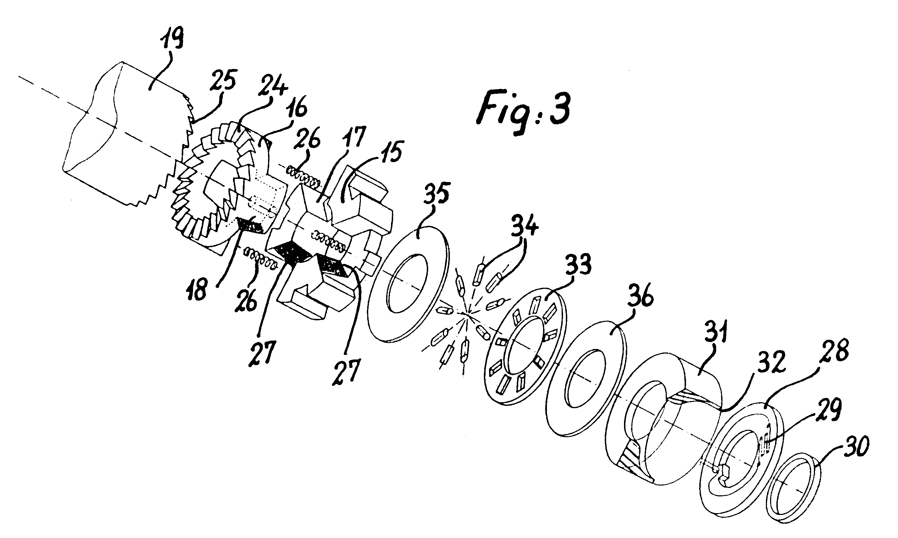

Cette bague 31 en forme de cloche est immobilisée en rotation de même que le disque flexible 28 et la rondelle d'appui 30. C'est pourquoi la bague rotative 15 prend appui sur la rondelle 31 par l'intermédiaire d'un roulement ou similaire. En l'occurrence, dans le cas présent il est interposé une sorte de butée à aiguilles constituée par un disque 33 portant des aiguilles rotatives 34 disposées radialement. De plus deux rondelles 35 et 36 sont disposées de part et d'autre de cette butée à aiguilles, la première étant rotative cependant que la seconde est fixe. Du reste, sur la figure 3 les références A et B désignent respectivement l'ensemble des pièces rotatives et l'ensemble des pièces fixes du présent mécanismes.

Lorsque l'un ou l'autre des pignons 10 ou 12 est entraîné par la chaine motrice 4, ceci assure la rotation de la couronne 15 ainsi que celle de la bague 16. Du fait des rampes hélicoïdales 27 prévues sur ces deux pièces, ce mouvement de rotation a pour effet de provoquer une poussée axiale sur la bague 16 et par suite son accouplement en rotation avec le manchon 19 grâce aux dents de loup 24 et 25. Le moyeu 3 de la roue arrière est donc lui-même entraîné en rotation.

Les diverses pièces 15, 16 et 19 se trouvent alors dans la position illustrée à la figure 4. Si l'on considère la force F agissant sur une des rampes 27, on peut constater que celle-ci peut être décomposée en une composante tangente Ft et une composante axiale Fa. La valeur de ces deux composantes est évidemment fonction de la valeur du couple d'entraînement.

C'est donc la composante axiale Fa, ou plus exactement la réaction due à celle-ci, qui est mesurée par le capteur 28-29.

En effet, la poussée axiale due aux rampes 27 est transmise par la couronne 15 de la bague 31 en forme de cloche. Celle-ci exerce donc une pression sur la périphérie du disque 28 qui n'est en appui sur la rondelle 30 que par son bord interne. En conséquence ce disque subit une flexion qui est détectée par la jauge 29 d'extensométrie.

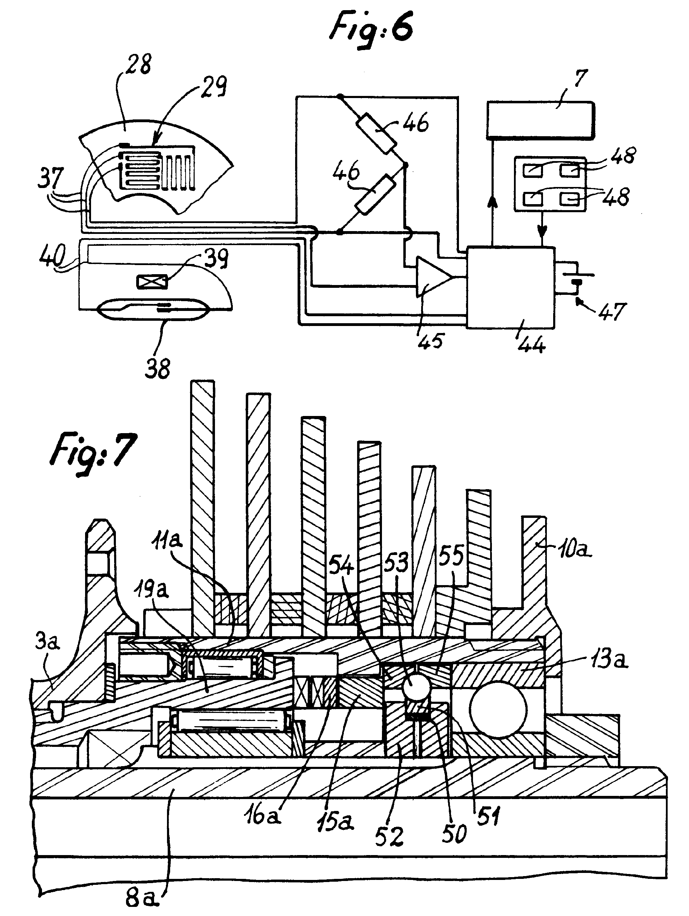

Par l'intermédiaire de conducteurs 37, cette jauge est raccordée au système de mesure prévu à l'intérieur du boîtier 6 mentionné précédemment. Le schéma de ce système de mesure est du reste illustré à la figure 6.

A ce système de mesure est également raccordé un capteur controlant la vitesse de rotation du moyeu 3 de la roue. Ce capteur peut consister en un contacteur 38 de type particulier, dénommé contact "REED", et dont la fermeture est commandée par le passage en regard d'un ou deux aimants 39 portés par le moyeu 3. Les fils de raccordement 40 de ce contacteur, ainsi que les fils 37 partant de la jauge 29 sont logés dans une rainure longitudinale 41 ménagée dans l'arbre fixe 3 et ces fils sortent par une ouverture 42 prévue dans une pièce fixe 43 située à l'extrémité de l'arbre 3 qui est opposé aux pignons 10 et 12. En conséquence la liaison des deux capteurs avec le système de mesure ne soulève absolument aucune difficulté particulière.

Comme indiqué sur le schéma de la figure 6, le système de mesure prévu dans le boîtier 6 comprend un micro processeur 44 comportant un programme assurant la mesure du couple transmis par la roue motrice et ce, à partir des indications fournies par les moyens de détection de la poussée axiale exercée par la couronne rotative 15 du mécanisme d'entraînement. Ce circuit comprend également un amplificateur différentiel 45 et des résistances d'équilibrage 46 et il est alimenté par une ou plusieurs piles 47. Le fonctionnement de ce système de mesure est commandé par enfoncement de touches 48 prévues sur le dessus du boîtier 6. Ce dernier comporte également le cadran 7 relié au circuit de mesure et sur lequel peut être affichée la valeur du couple transmis par la roue motrice, et/ou la vitesse du cycle.

Ainsi qu'il a déjà été indiqué, le principal avantage du système de détection réside dans le fait que la mesure du couple transmis par la roue motrice est assurée par des moyens de détection qui sont fixes et ce, grâce au fait qu'au lieu de détecter la valeur d'un couple d'entraînement en rotation, on détecte une grandeur fonction de ce couple, en l'occurrence la composante axiale de l'effort d'entraînement entre les deux pièces rotatives 15 et 16. En conséquence, la liaison électrique des moyens de détection avec le système de mesure ne soulève aucune difficulté. Il en est de même pour l'incorporation de ces moyens de détection à l'intérieur du mécanisme d'entraînement du moyeu de la roue.

Cependant il est bien évident que la roue motrice selon l'invention et le mécanisme d'entraînement de celle-ci peuvent donner lieu à diverses variantes de réalisation. Comme il a déjà été indiqué, les rampes hélicoïdales 27 pourraient être remplacées par tout autre système de came ou de liaison apte à assurer une poussée axiale d'écartement entre les deux pièces 15 et 16 du mécanisme d'entraînement sous l'effet de la rotation de celles-ci. Ainsi il serait possible d'utiliser un système vis et billes ou encore un système à rouleaux. Par ailleurs, les moyens de détection pourraient être réalisés différemment pour autant que ceux-ci soient en mesure de détecter la valeur de l'effort de poussée axiale à contrôler. Eventuellement au lieu d'être disposés en regard de la couronne rotative 15, ces moyens de détection pourraient être associés à la bague 16 du mécanisme d'entraînement.

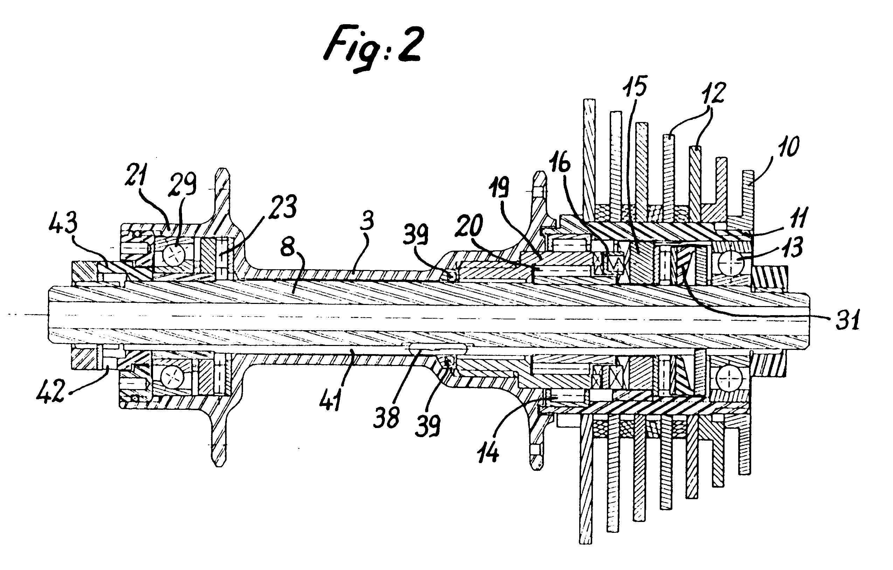

La figure 7 représente une autre forme de réalisation encore des moyens de détection susceptibles d'être prévus dans la roue motrice selon l'invention pour la mesure du couple transmis. Sur cette figure, les pièces identiques ou équivalentes à celles représentées sur la figure 2 sont indiquées par les mêmes chiffres de référence affectés de l'indice "a".

Comme précédemment, le mécanisme d'entraînement du moyeu 3a comprend une première pièce rotative, en l'occurrence une couronne 15a, qui est solidaire en rotation avec le fourreau 11a portant les pignons d'entraînement. Cette couronne est identique à la couronne 15 prévue précédemment et, de même que celle-ci, elle est accouplée en rotation avec une bague 16a susceptible d'être accouplée, par un système de roue libre, avec un manchon 19a solidaire du moyeu 3a. Entre les deux pièces rotatives 15a et 16a, il est prévu un système de came ou de rampe hélicoïdale assurant une poussée axiale d'écartement sous l'effet de la rotation impartie à ces pièces.

Le mécanisme ainsi prévu diffère de celui des figures 2 et 3 par le fait que dans le cas présent les moyens de détection de la poussée axiale exercée par la couronne 15a consistent en une jauge de contrainte 50 collée sur la paroi interne d'une bague 51 placée dans un logement prévu à la périphérie d'une couronne 52 portée par l'arbre fixe 8a du moyeu. La bague 51 est entourée par une série de billes 53 partiellement logées dans deux autres bagues externes 54 et 55 disposées de part et d'autre de celles-ci. La bague externe 55 s'appuie sur le roulement étanche 13a prévu du côté extérieur, cependant que la bague 54 se trouve disposée en regard de la couronne rotative 15a.

Ainsi, la poussée axiale exercée par cette couronne 15a en direction du roulement 13a d'extrémité se trouve transformée en une poussée radiale par l'intermédiaire des billes 53. C'est donc la valeur de cette poussée radiale qui est détectée par la jauge annulaire 50. Bien entendu, celle-ci est reliée, comme la jauge précédente 29, au système de mesure prévu dans le boîtier 6.

Mais de nombreux autres systèmes de détection pourraient être adoptés pour contrôler la valeur de la poussée axiale exercée par la couronne 15 ou 15a lors de son entraînement en rotation. Par ailleurs, il convient de rappeler que l'invention a pour objet non seulement des roues motrices de cycle telles que décrites précédemment, mais également des cycles équipés de telles roues motrices et comportant un appareil apte à assurer la mesure du couple transmis, ou d'une grandeur associée à celui-ci, et ce en fonction des informations provenant des moyens de détection prévus dans la roue motrice.

## Revendications

1. Roue motrice d'un cycle ou similaire, dans laquelle le mécanisme, assurant l'entraînement du moyeu de cette roue à partir du ou des pignons de réception de la chaîne motrice, comporte un système de mesure du couple transmis ou d'une grandeur associée à celui-ci, caractérisée en ce que :
   – entre une première pièce (15), entraînée en rotation par le ou les pignons (10, 12), et une seconde pièce (16) montée axialement coulissante sur l'arbre fixe (8) du moyeu (3) et solidaire en rotation à la fois avec cette première pièce (15) et avec le moyeu (3), il est prévu une ou plusieurs cames ou similaires (27) aptes à provoquer une poussée axiale tendant à écarter ces deux pièces sous l'effet de la rotation qui leur est impartie,
   – et en ce que des moyens de détection (29) de la valeur d'un effort de poussée sont disposée en regard de l'une de ces pièces, ces moyens de détection (29) étant portés par une pièce fixe et reliés à un système de mesure apte à établir, à partir des données provenant de ceux-ci, la valeur du couple d'entraînement appliqué à la roue, ou une grandeur associée à celui-ci.

2. Roue motrice de cycle selon la revendication 1, caractérisé en ce que la solidarisation en rotation de la seconde pièce (16) avec le moyeu (3) de cette roue est assurée par des moyens d'accouplement (24, 25) actifs uniquement dans le sens moteur, un jeu suffisant étant prévu pour permettre la rotation du moyeu (3) en roue libre.

3. Roue motrice de cycle selon l'une des revendications précédentes, caractérisée en ce que les moyens de détection utilisés sont disposés en regard de la première pièce rotative du mécanisme d'entraînement, avec interposition d'un roulement ou d'une butée à billes ou à aiguilles.

4. Roue motrice de cycle selon la revendication 3, caractérisée en ce que le capteur des efforts de poussée consiste en un disque flexible évidé (28) immobilisé sur l'arbre fixe (8) du moyeu (3) et qui porte une ou plusieurs jauges d'extensométrie (29) branchées dans le circuit du système de mesure.

5. Roue motrice de cycle selon la revendication 4, caractérisé en ce que le disque flexible (28) portant la ou les jauges (29) d'extensométrie est en appui sur une rondelle fixe (30) de plus faible diamètre qui est en contact uniquement avec son bord interne et la première pièce rotative (15) du mécanisme d'entraînement s'appuie sur ce disque flexible (28) par l'intermédiaire d'une bague (31) en forme de cloche qui n'est en contact qu'avec le bord périphérique de ce disque.

6. Roue motrice de cycle selon l'une des revendications précédentes, caractérisée en ce que les cames prévues pour exercer une poussée axiale sur la seconde pièce (16) du mécanisme sous l'effet de la rotation de la première pièce (15) consistent en des rampes complémentaires (27), de forme hélicoïdale ou similaire, qui sont ménagées sur les faces en regard de ces deux pièces.

7. Roue motrice de cycle selon la revendication 6, caractérisée en ce que les rampes complémentaires (27), assurant une poussée axiale sous l'effet de la rotation de la première pièce rotative du mécanisme, sont prévues sur des dents ou saillies (18) des deux pièces (15-16) en contact et qui sont en prise les unes avec les autres pour assurer l'accouplement en rotation de ces deux pièces.

8. Roue motrice de cycle selon l'une des revendications précédentes, caractérisé en ce que la première pièce entraînée en rotation par le ou les pignons consiste en une couronne dentée (15) solidaire en rotation avec un fourreau (10) portant le ou les pignons d'entraînement (11-12).

9. Roue motrice selon l'une des revendications 1 à 3 et éventuellement l'une des revendications 6 à 8, caractérisée en ce que le capteur des efforts de poussée consiste en une jauge annulaire (50) en regard de laquelle est disposé un organe apte à exercer sur celle-ci un effort radial sous l'effet de la poussée axiale due à la première pièce rotative (15) du mécanisme d'entraînement.

10. Cycle caractérisé en ce qu'il est équipé d'une roue motrice selon l'une des revendications précédentes, et que les moyens de détection (29) ou prévus dans cette roue sont raccordés à un appareil de mesure disposé dans un boîtier (6) comportant un cadran d'affichage et qui est fixé sur le guidon de ce cycle.

**Patentansprüche**

1. Antriebsrad eines Fahrrades oder dergl., bei dem der Mechanismus, der den Antrieb der Nabe des Rades ausgehend von einem oder mehreren Zahnrädern zur Aufnahme der Antriebskette sicherstellt, eine Vorrichtung zum Messen des übertragenen Drehmoments oder einer diesem zugeordneten Größe umfaßt, dadurch gekennzeichnet, daß zwischen einem ersten Teil (15), das durch das oder die Zahnräder (10, 12) in Drehung versetzt wird, und einem zweiten Teil (16), welches axial verschiebbar auf der festen Welle (8) der Nabe (3) angeordnet und zusätzlich drehfest mit dem ersten Teil (15) und der Nabe (3) verbunden ist, ein oder mehrere Nocken (27) oder dergl. vorgesehen sind, um einen axialen Schub hervorzurufen und dadurch die beiden Teile unter der Wirkung der Drehung, denen diese ausgesetzt sind, voneinander zu entfernen, und daß Mittel (29) zum Erfassen des Wertes einer Schubkraft gegenüber einem der Teile angeordnet sind, wobei diese Erfassungsmittel (29) von einem festen Teil getragen und mit einer Meßvorrichtung verbunden sind, um ausgehend von durch diese vorgegebenen Größen den Wert des Antriebsmoments, dem das Rad ausgesetzt ist, oder eine diesem zugeordnete Größe zu bestimmen.

2. Antriebsrad eines Fahrrades nach Anspruch 1, dadurch gekennzeichnet, daß die feste Drehverbindung des zweiten Teils (16) mit der Nabe (3) des Rades durch Kupplungsmittel (24, 25) sichergestellt ist, die nur in Antriebsrichtung wirksam sind, wobei ein ausreichendes Spiel vorgesehen ist, um eine Drehung der Nabe (3) im Freilauf zuzulassen.

3. Antriebsrad eines Fahrrades nach einem der vorhergehenden Ansprüche, dadurch gekennzeichnet, daß die verwendeten Erfassungsmittel gegenüber dem ersten drehenden Teil des Antriebsmechanismus angeordnet sind, und zwar unter Zwischenschaltung eines Kugel- oder Druckkugellagers oder eines Nadellagers.

4. Antriebsrad eines Fahrrades nach Anspruch 3, dadurch gekennzeichnet, daß der Meßfühler für die Schubkräfte aus einer flexiblen, hohlen Scheibe (28) besteht, die auf der festen Welle (8) der Nabe (3) festgelegt und eine oder mehrere Dehnungsmeßstreifen (29) trägt, die in den Schaltkreis der Meßvorrichtung eingeschaltet sind.

5. Antriebsrad eines Fahrrades nach Anspruch 4, dadurch gekennzeichnet, daß die flexible Scheibe (28), die den oder die Dehnungsmeßstreifen (29) trägt, sich an einer festen Scheibe (30) kleineren Durchmessers abstützt, die nur mit deren innerem Rand in Berührung steht und daß das erste drehende Teil (15) des Antriebsmechanismus sich an der flexiblen Scheibe (28) über einen Ring (31) in Form einer Glocke abstützt, der nur mit dem Umfangsrand dieser Scheibe in Kontakt ist.

6. Antriebsrad eines Fahrrades nach einem der vorhergehenden Ansprüche, dadurch gekennzeichnet, daß die Nocken, die vorgesehen sind, eine axiale Schubkraft auf das zweite Teil (16) des Mechanismus unter der Wirkung der Drehung des ersten Teils (15) auszuüben, durch komplementäre Rampen (27) gebildet sind, die eine Spiralform oder dergl. aufweisen und auf den den beiden Teilen gegenüberliegenden Seiten vorgesehen sind.

7. Antriebsrad eines Fahrrades nach Anspruch 6, dadurch gekennzeichnet, daß die komplementären Rampen (27), die einen axialen Schub unter der Wirkung der Drehung des ersten drehenden Teils des Mechanismus sicherstellen, auf Zähnen oder Vorsprüngen (18) der beiden in Kontakt stehenden Teile (15 - 16) vorgesehen sind und miteinander in Eingriff stehen, um die Drehkupplung der beiden Teile sicherzustellen.

8. Antriebsrad eines Fahrrades nach einem der vorhergehenden Ansprüche, dadurch gekennzeichnet, daß das erste Teil, das durch das oder die Zahnräder in Drehung versetzt wird, aus einem Zahnkranz (15) besteht, der drehfest mit einer Hülse (10) verbunden ist, die das oder die Antriebszahnräder (11 - 12) trägt.

9. Antriebsrad nach einem der Ansprüche 1 bis 3 und gegebenenfalls einem der Ansprüche 6 bis 8, dadurch gekennzeichnet, daß der Meßfühler für die Schubkräfte aus einer ringförmigen Lehre (50) besteht, gegenüber der ein Organ angeordnet ist, um auf diese eine radiale Kraft unter der Wirkung des axialen, durch das erste drehende Teil (15) des Antriebsmechanismus hervorgerufenen Schubes auszuüben.

10. Fahrrad, dadurch gekennzeichnet, daß es mit einem Antriebsrad gemäß einem der vorhergehenden Ansprüche ausgestattet ist und daß die Erfassungsmittel (29) oder die in dem Rad vorgesehenen Mittel mit einer Meßvorrichtung verbunden sind, die in einem Gehäuse (6) angeordnet ist, das eine Anzeige umfaßt und an der Lenkstange des Fahrrades fixiert ist.

## Claims

1. A driving wheel for a cycle or the like, wherein the mechanism for driving the hub of said wheel, starting from the pinion or pinions receiving the driving chain, comprises a system for measuring the transmitted torque or a magnitude associated thereto, **characterized** in that :
   – between a first piece (15) driven in rotation by the pinion or pinions (10, 12) and a second piece (16) mounted so as to be axially slidable on the fixed shaft (8) of the hub (3) and rotatably bound up with said first piece (15) as well as with the hub (3), there are provided one or several cams (27) or the like adapted for causing an axial thrust which tends to spread said two pieces apart under the effect of the rotation imparted to said pieces; and
   – in that detection means (29) for detecting the value of a thrust force are disposed in registry with one of said pieces, said detection means (29) being carried by a fixed piece and being connected to a measurement system adapted for determining, on the basis of the data provided by said detection means, the value of the driving torque applied to the wheel, or a magnitude associated to said torque.

2. A driving wheel for a cycle, according to Claim 1, characterized in that the rotational coupling of said second piece (16) with the hub (3) of the wheel is effected by coupling means (24, 25) which are active solely in the driving direction, a sufficient clearance being provided for allowing the hub (3) to rotate in a free-wheeling mode.

3. A cycle driving wheel according to one of the previous Claims, characterized in that the detection means being used are disposed in registry with the first rotary piece of the drive mechanism, a radial or axial ball bearing or needle bearing being interposed therebetween.

4. A cycle driving wheel according to Claim 3, characterized in that the sensor provided for detecting the thrust forces consists in a hollowed-out flexible disc (28) fastened to the fixed shaft (8) of the hub (3), said disc carrying one or several strain gauges (29) connected into the measurement system circuit.

5. A cycle driving wheel according to Claim 4, characterized in that the flexible disc (28) carrying the strain gauge(s) (29) rests against a fixed washer (30) having a smaller diameter, which is contacting solely the inner edge of said disc, while the first rotary piece (15) of the drive mechanism rests against said flexible disc (28) through the intermediary of a bell-shaped ring (31) which contacts solely the outer peripheral edge of said disc.

6. A cycle driving wheel according to one of the previous Claims, characterized in that the cams provided for exerting an axial thrust upon the second piece (16) of the mechanism under the effect of the rotation of the first piece (15) consist of matching ramps (27) having a helical or similar shape, formed on the opposite faces of said two pieces.

7. A cycle driving wheel according to Claim 6, characterized in that the matching ramps (27) exerting an axial thrust under the effect of the rotation of the first rotary piece of the mechanism are provided on teeth or protrusions (18) of the two contacting pieces (15, 16), said teeth meshing together for effecting the rotational coupling of said two pieces.

8. A cycle driving wheel according to one of the previous Claims, characterized in that the first piece being driven in rotation by the pinion or pinions consists in a toothed crown (15) rotatably bound up with a sleeve (10) carrying the drive pinion or pinions (11, 12).

9. Driving wheel according to one of Claims 1-3 and, if the case arises, according to one of Claims 6-8, characterized in that the sensor for detecting the thrust forces consists of an annular gauge (50) in registry with which is disposed a member adapted for exerting upon said gauge a radial effort under the effect of the axial thrust caused by the first rotary piece (15) of the drive mechanism.

10. A cycle characterized in that it is equipped with a driving wheel according to one of the previous Claims and in that the detection means (29) provided in said wheel are connected to a measurement apparatus disposed in a housing (6) comprising a display dial and which is fixed on the handlebar of said cycle.

Fig:1

EP 0 343 022 B1

# Fig: 2

EP 0 343 022 B1

Fig. 3

EP 0 343 022 B1

Fig. 4          Fig. 5

# Fig:6

# Fig:7